# EUROPEAN PATENT APPLICATION

(11) **EP 4 628 427 A1**
(43) Date of publication of application: **08.10.2025**
(21) Application number: 22967106.0
(22) Date of filing: 29.11.2022
(51) Int. Cl.: B65G 1/00

(54) **AUTOMATIC MOVING DEVICE, MANAGEMENT DEVICE, CONVEYANCE SYSTEM, AND CONTROL METHOD AND MANAGEMENT METHOD OF AUTOMATIC MOVING DEVICE**

(71) Applicant: Fuji Corporation, Chiryu-shi, Aichi 472-8686 (JP)
(72) Inventor: SAWANAMI Hisato, Chiryu-shi, Aichi 472-8686 (JP); KAWAGUCHI Koji, Chiryu-shi, Aichi 472-8686 (JP); ODA Takuya, Chiryu-shi, Aichi 472-8686 (JP)
(74) Representative: Grünecker Patent- und Rechtsanwälte PartG mbB
(86) International application number: PCT/JP2022/043932
(87) International publication number: WO 2024/116271

(57) **Abstract**

An automatic moving device of the present disclosure is an automatic moving device for use in a conveyance system configured to convey an article, the automatic moving device includes: a drive section configured to drive traveling wheels provided in a vehicle body section; a loading section disposed in the vehicle body section and configured to load or engage with a conveyance object; and a control section configured to control the drive section and the loading section, in which the control section is configured to control the loading section and the drive section such that the loading section loads or engages with a signage including a notification section configured to give notification of information, and the traveling wheels are driven and the vehicle body section moves in a specific space.

## Description

### Technical Field

The present description discloses an automatic moving device, a management device, a conveyance system, and a control method and a management method of the automatic moving device.

### Background Art

Conventionally, as a robot for providing an intelligent service in a commercial facility, there has been proposed a robot including a moving cart, an upper sensor that detects an object in an upper field of view of the robot, a lower sensor that detects an object in a lower field of view of the robot, a display, and a computer that communicates with the moving cart, the upper sensor, and the lower sensor (for example, refer to Patent Literature 1). The robot computer is configured to perform inventory control of products in a commercial facility, and provides inventory mismatch data to a user at a computer station.

### Citation List

### Patent Literature

Patent Literature 1:JP-A-2020-502649

### Summary of the Invention

### Technical Problem

Examples of a robot used in a commercial facility include an automatic moving device that moves a conveyance object such as a basket cart in the commercial facility. There is a problem in that the automatic moving device conveys products outside business hours of a commercial facility, stands by in a stockroom during the business hours, and has a low operation time. As described above, there is a demand for effective means for improving an operation rate of the automatic moving device.

The present disclosure has been made to solve such a problem, and a main object thereof is to provide an automatic moving device, a management device, a conveyance system, and a control method and a management method of the automatic moving device with which it is possible to further improve an operation rate.

The present disclosure employs the following means in order to achieve the object described above.

An automatic moving device disclosed in the present description is an automatic moving device for use in a conveyance system configured to convey an article, the automatic moving device includes:
a drive section configured to drive traveling wheels provided in a vehicle body section;
a loading section disposed in the vehicle body section and configured to load or engage with a conveyance object; and
a control section configured to control the drive section and the loading section,
in which the control section is configured to control the loading section and the drive section such that the loading section loads or engages with a signage including a notification section configured to give notification of information, and the traveling wheels are driven and the vehicle body section moves in a specific space.

The automatic moving device moves the conveyance object, and engages with the signage that give notification of information and moves in a specific space such as a commercial facility. Therefore, in the automatic moving device, an operation rate of the automatic moving device can be further improved through the movement of the signage. In addition, for example, the automatic moving device can effectively provide information such as an increase in sales of a commercial facility, through the movement of the signage.

### Brief Description of Drawings

Fig. 1 is a schematic view showing an example of conveyance system 10.
Fig. 2 is a view showing an example of automatic moving device 30.
Fig. 3 is a four-sided view showing an example of automatic moving device 30.
Fig. 4 is a three-sided view of automatic moving device 30 connected to cart 12.
Fig. 5 is a view showing an example of information stored in storage section 23.
Fig. 6 is a view showing an example of signage 60.
Fig. 7 is a view showing an example of another signage 60B.
Fig. 8 is a flowchart showing an example of a work command process routine.
Fig. 9 is a flowchart showing an example of an automatic movement process routine.
Fig. 10 is a flowchart showing an example of a signage movement process routine.
Fig. 11 is a view of automatic moving device 30 engaging with signage 60.
Fig. 12 is a flowchart showing an example of an advertisement notification process routine.
Fig. 13 is a view showing an example of a movement route of signage 60 in commercial facility 11.

### Description of Embodiments

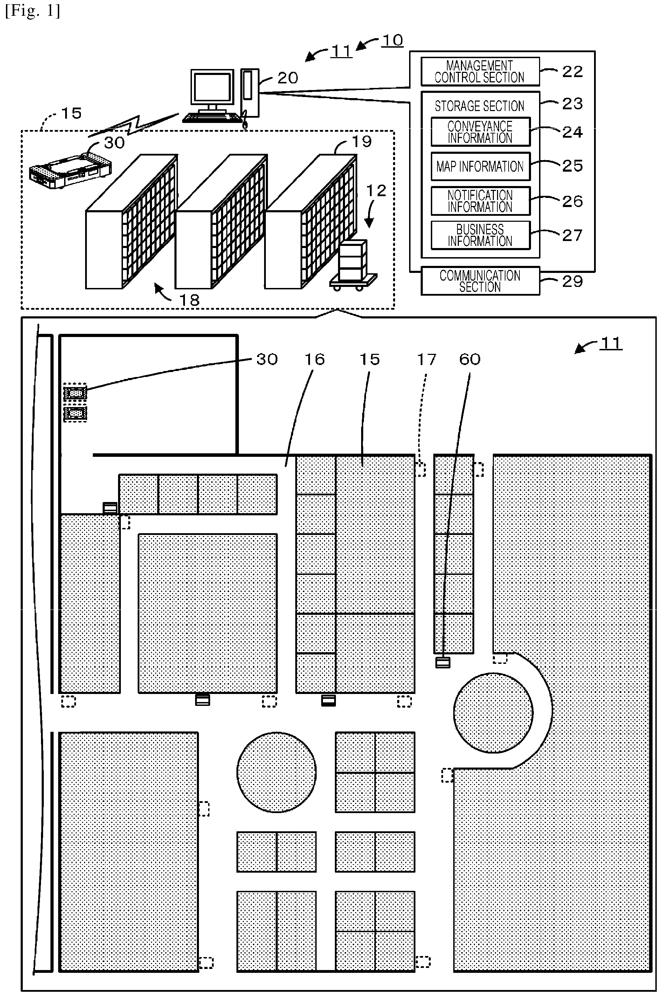

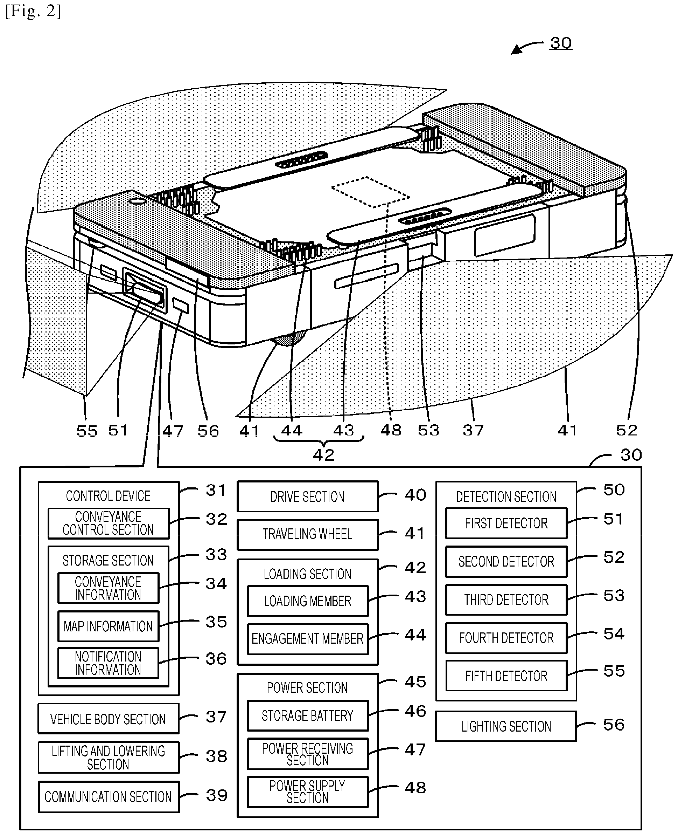

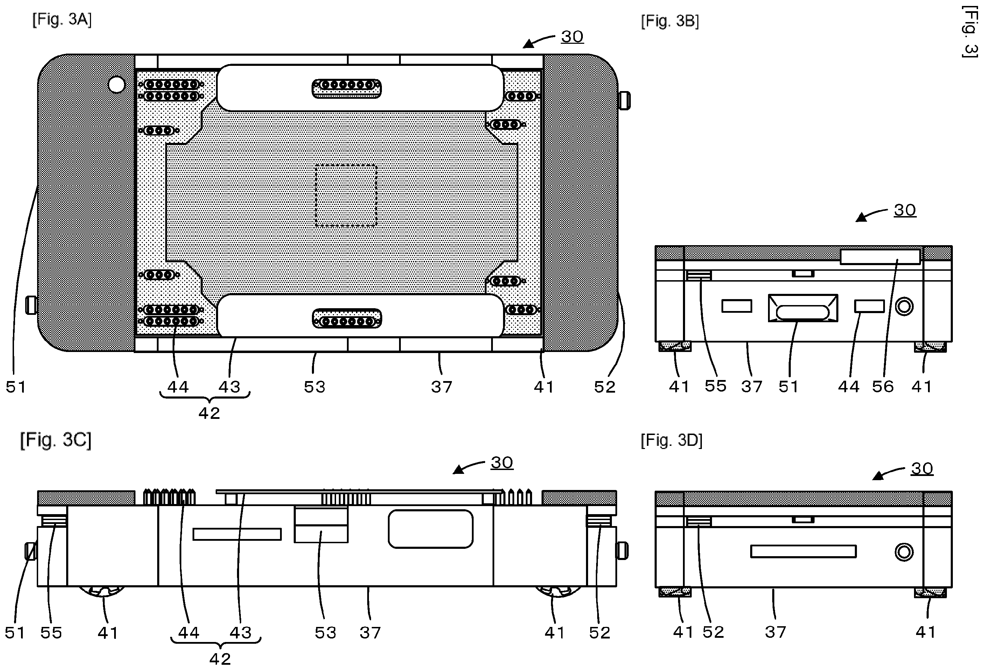

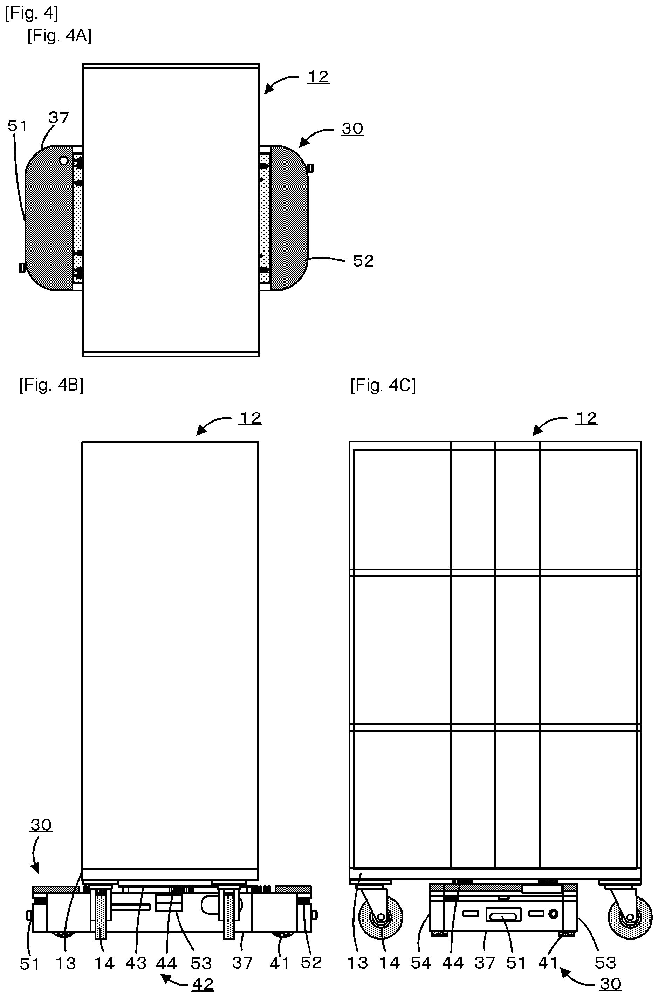

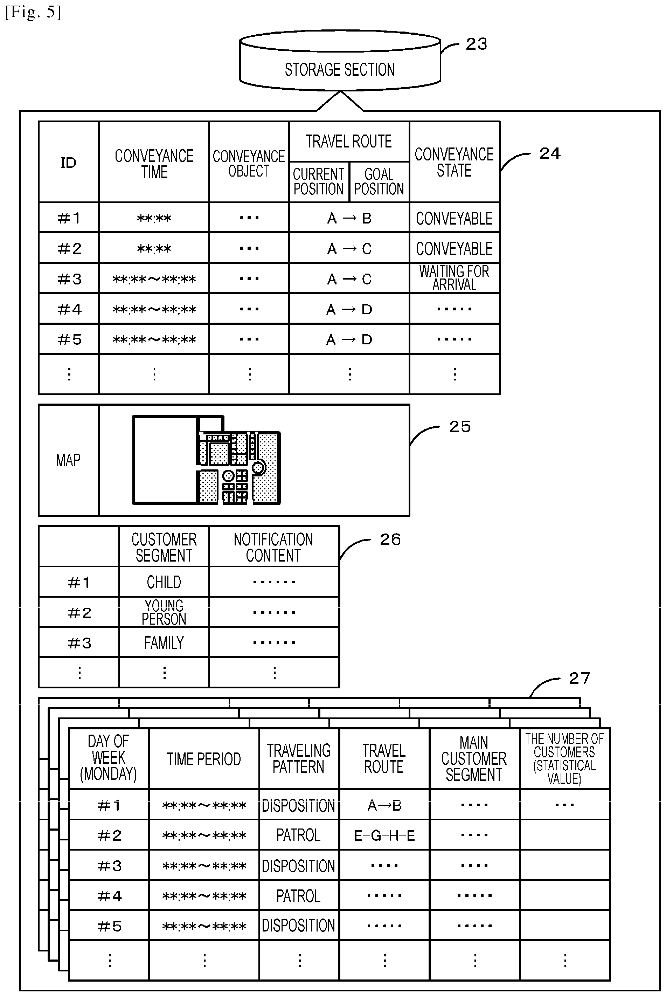

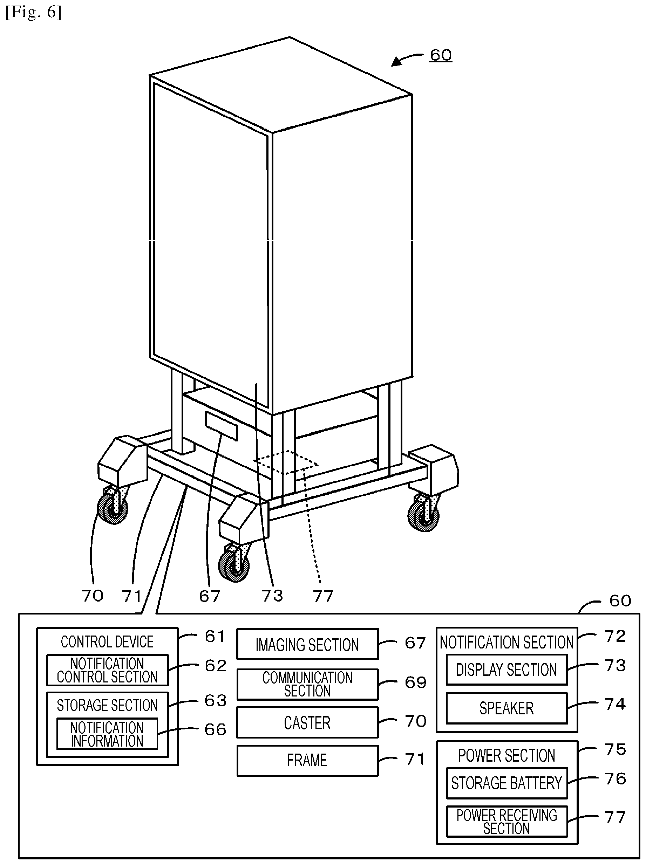

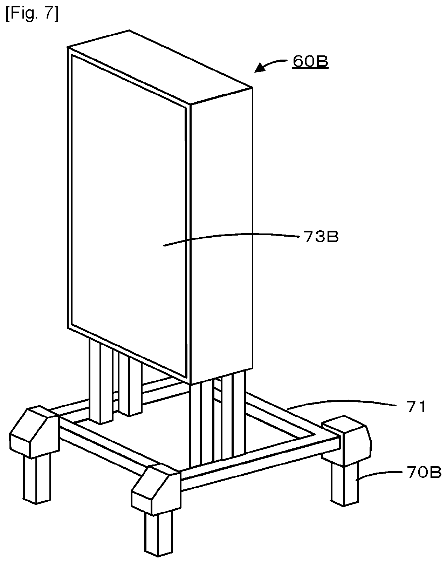

Embodiments of the present disclosure will be described with reference to the drawings. Fig. 1 is a schematic view showing an example of conveyance system 10. Fig. 2 is a view showing an example of automatic moving device 30. Fig. 3 is a four-sided view showing an example of automatic moving device 30, where Fig. 3A is a plan view, Fig. 3B is a front view, Fig. 3C is a side view, and Fig. 3D is a rear view. Fig. 4 is a three-sided view of automatic moving device 30 connected to cart 12, where Fig. 4A is a plan view, Fig. 4B is a front view, and Fig. 4C is a side view. Fig. 5 is a view showing an example of conveyance information 24, map information 25, notification information 26, and business information 27 stored in storage section 23 of management device 20. Fig. 6 is a view showing an example of signage 60. Fig. 7 is a view showing an example of another signage 60B.

Conveyance system 10 is a system that includes automatic moving device 30 for automatically moving an article as a movement target object in a specific space and performs a process of conveying the article. Conveyance system 10 will be described by way of example in which the articles are conveyed by using cart 12 as a conveyance object, but the present invention is not particularly limited to this, and cart 12 may be omitted or other components may be used. Here, the "article" is not particularly limited as long as the article is something conveyed, and for example, examples of the "article" include industrial products such as a machine, a device, and units and components of devices, generally used daily consumer products, foods, and fresh products. The specific space is described here as commercial facility 11 having multiple stores 15 or the like, but is not particularly limited thereto, and may be an exhibition hall, a sports facility, a museum, a science hall, a zoo, an aquarium, or the like.

As shown in Fig. 1, conveyance system 10 includes management device 20 and automatic moving device 30, and is used in commercial facility 11. Commercial facility 11 includes multiple stores 15, passage 16, charging spot 17, and the like. Store 15 displays and sells conveyed articles. Store 15 includes one or more automatic moving devices 30, so that cart 12 can be automatically moved. Store 15 includes a passage through which cart 12 or a person moves, and display shelf 19 on which articles are displayed. Store 15 also includes a store PC that manages articles. Passage 16 is present between stores 15 or in store 15, and automatic moving device 30 or a person moves through passage 16. As will be described in detail later, charging spot 17 is a facility that charges storage battery 76 of signage 60 or storage battery 46 of automatic moving device 30. Charging spot 17 may perform either wireless power supply using electromagnetic induction or wired power supply by connecting a cable to a terminal. Commercial facility 11 includes one or more automatic moving devices 30, so that a conveyance object such as cart 12 can be automatically moved. In commercial facility 11, a worker or the like performs work of placing an article on cart 12 corresponding to store 15 as a conveyance destination. Automatic moving device 30 loads or engages with cart 12 of which a conveyance destination is specified, and performs work of moving to store 15 as the conveyance destination. A standby location of automatic moving device 30 is set to charging spot 17 in a stockroom (refer to Fig. 1). Further, in conveyance system 10, when the conveyance of cart 12 is not performed by automatic moving device 30 and commercial facility 11 is within business hours, a notification process of causing automatic moving device 30 to move, in commercial facility 11, signage 60 that gives notification of an advertisement is performed. Management device 20 sets work content of automatic moving device 30.

Cart 12 is a conveyance object used for conveying articles, and includes placement section 13 and casters 14 as shown in Figs. 1 and 4. Placement section 13 is a plate-shaped member on which articles are to be loaded. Casters 14 have traveling wheels for causing cart 12 to travel, and are disposed on a lower surface side of placement section 13. Cart 12 may be a basket cart.

Management device 20 is disposed in commercial facility 11 and is configured as a control device that performs product management in commercial facility 11, management of automatic moving device 30, and the like. Management device 20 is a server used in conveyance system 10 including automatic moving device 30 that loads or engages with a conveyance object to move the conveyance object. Management device 20 includes management control section 22 as a management section, storage section 23, and communication section 29. Management control section 22 includes CPU and controls the entire device. Storage section 23 stores various application programs and various data files. Storage section 23 stores conveyance information 24, map information 25, notification information 26, business information 27, and the like. As shown in Fig. 5, conveyance information 24 is information used for managing the conveyance of the article in commercial facility 11, and includes identification information (ID) of the article, a conveyance time, a type of the conveyance object, a current position and a goal position as a travel route, a current state of the conveyance object, and the like. Map information 25 is information on a map of commercial facility 11. Notification information 26 includes information on a promotion and an advertisement to be provided to visitors visiting store 15. In notification information 26, a customer segment is associated with content of a promotion and an advertisement according to the customer segment. Examples of the customer segment include age groups such as children, young people, families, and elderly people, and genders such as men and women. The advertisement content includes, for example, information on restaurants, fashion information, and information on pet shops, miscellaneous goods shops, and accessory shops in commercial facility 11. In addition, the advertisement content includes information of an event according to a season, a bargain, and the like. Business information 27 includes information on business of commercial facility 11 and is used for utilization of automatic moving device 30. In business information 27, for example, a traveling pattern of automatic moving device 30, a travel route, a statistical value of a main customer segment and the number of customers, and the like are associated with each time period on a specific day of the week in a specific season. Note that business information 27 includes a predetermined factor that specifies movement routes of automatic moving device 30 and signage 60, such as a season, a time period, a day of a week, the number of visitors, and a visitor segment. Management device 20 uses business information 27 to set a movement route and advertisement content of signage 60 in commercial facility 11. Communication section 29 is an interface that wirelessly communicates with an external device such as automatic moving device 30. Management control section 22 exchanges information with an external device via communication section 29.

As shown in Figs. 2 to 4, automatic moving device 30 is a vehicle that automatically moves cart 12 as a conveyance object or signage 60. Automatic moving device 30 enters a space between casters 14 on the lower surface side of placement section 13 of cart 12 and lifts and loads placement section 13 from below or is connected to cart 12 in such a way that automatic moving device 30 locks into and tow placement section 13, thereby moving cart 12. Automatic moving device 30 may be an automatic guided vehicle (AGV) that moves along a line formed on a road surface, a wall surface, or the like, or may be an autonomous mobile robot (AMR) that moves on a free route by sensing surroundings. As shown in Fig. 2, automatic moving device 30 includes control device 31, vehicle body section 37, lifting and lowering section 38, communication section 39, drive section 40, loading section 42, power section 45, detection section 50, and lighting section 56.

Control device 31 is a controller that controls an entirety of automatic moving device 30, and includes conveyance control section 32 such as CPU and storage section 33 such as a flash memory. Conveyance control section 32 outputs control signals and the like to lifting and lowering section 38, drive section 40, communication section 39, and detection section 50, and inputs signals from communication section 39 and detection section 50. Conveyance control section 32 controls loading section 42 by controlling lifting and lowering section 38. Conveyance control section 32 obtains a moving direction, a moving distance, a current position, and the like of automatic moving device 30 based on a driving state of drive section 40 and the like. Conveyance control section 32 controls the movement or stoppage of automatic moving device 30 based on the information from detection section 50. Storage section 33 stores various application programs and various data files. Storage section 33 stores, for example, conveyance information 34, map information 35, and notification information 36 similar to conveyance information 24, map information 25, and notification information 26 stored in storage section 23. Conveyance information 34, map information 35, and notification information 36 are acquired from management device 20 or the like by communication.

Vehicle body section 37 is a plate-shaped housing that enters a lower surface of cart 12, traveling wheels 41 are disposed on a lower surface side, loading section 42 is disposed on an upper surface side, and vehicle body section 37 travels. Control device 31, communication section 39, drive section 40, power section 45, and the like are accommodated inside vehicle body section 37. Detection section 50 is disposed on an outer surface of vehicle body section 37. Communication section 39 is an interface that wirelessly exchanges information with external devices such as management device 20 and signage 60. Conveyance control section 32 exchanges information with an external device via communication section 39.

Drive section 40 is a motor that is connected to respective traveling wheels 41 of vehicle body section 37 and drives automatic moving device 30 to travel by rotationally driving connected traveling wheels 41. Automatic moving device 30 includes four traveling wheels 41 and moves by the rotational driving of traveling wheels 41. Traveling wheels 41 may also be mecanum wheels or omni wheels that are movable vertically and horizontally by independent driving of four wheels.

Loading section 42 is a structure that is disposed on the upper surface of vehicle body section 37 and loads or engages with cart 12 as a conveyance object to move cart 12. Loading section 42 includes, for example, loading member 43 that moves cart 12 in a loading state in which placement section 13 of cart 12 is lifted, and engagement members 44 that lock into and tow placement section 13. Loading member 43 is a plate-shaped member that pushes up a lower surface of the movement target object, and is disposed on the sides of the upper surface of vehicle body section 37 to be movable up and down one by one. Engagement members 44 are multiple pin-shaped members, and are configured to be lowered by a spring when a load is applied from the upper surface side. Engagement members 44 are disposed at four corners of the upper surface of vehicle body section 37, and are disposed to be inserted into through holes at the center of loading member 43. Lifting and lowering section 38 is a drive section that lifts and lowers loading section 42, and lifts and lowers either loading member 43 or engagement members 44.

Power section 45 is a device that supplies power to control device 31, lifting and lowering section 38, drive section 40, and the like. Power section 45 includes storage battery 46, power receiving section 47, and power supply section 48. Storage battery 46 is a secondary battery that stores power supplied from an external power supply and discharges the power as automatic moving device 30 operates. Power receiving section 47 is a unit that inputs power to an external power supply in a non-contact state using electromagnetic induction or a connected state in which a terminal is connected. Power receiving section 47 may be connected to a terminal disposed on a wall surface of commercial facility 11 to receive power. Power supply section 48 is, for example, a unit that supplies power to an external device such as signage 60, and may supply power in a non-contact state using electromagnetic induction or in a contact state in which a terminal is connected. Power supply section 48 is disposed at the center of the upper surface of vehicle body section 37.

Detection section 50 detects a state of automatic moving device 30, an object existing around automatic moving device 30, and a distance thereof. Detection section 50 may detect the presence of the object or the distance from the object, for example, by emitting light such as a laser, or a sound wave to the surroundings, and detecting a reflected wave. Detection section 50 may include at least one of an inertial measurement unit, a laser scan sensor, an imaging camera, a stereo camera, and a sonar sensor, for example. Detection section 50 includes first to fifth detection sections 51 to 55. First detector 51 may be a stereo camera disposed on a front side of the vehicle. Second detector 52, third detector 53, fourth detector 54, and fifth detector 55 may be light detection and ranging (LiDAR) disposed on a front surface, a side surface, or a rear surface of vehicle body section 37. In addition, detection section 50 may include a gyro sensor and an acceleration sensor (not shown), and automatic moving device 30 may include an inertial measurement unit (IMU) that detects the inclination and acceleration of the own vehicle body. In detection section 50, first detector 51 can detect a person around vehicle body section 37. Lighting section 56 is an LED light that illuminates the surroundings.

Signage 60 is a device that is disposed at multiple predetermined locations in commercial facility 11 and notifies the surroundings of information. As shown in Fig. 6, signage 60 is configured as a digital signage, and includes control device 61, imaging section 67, communication section 69, casters 70, frame 71, notification section 72, and power section 75. Signage 60 is configured to be movable by casters 70. Control device 61 is a controller that controls an entirety of signage 60, and includes notification control section 62 such as CPU and storage section 63 such as a flash memory. Notification control section 62 outputs control signals and the like to imaging section 67, communication section 69, notification section 72, and power section 75, and inputs signals from imaging section 67, communication section 69, notification section 72, and power section 75. Notification control section 62 notifies visitors in the vicinity of information by controlling notification section 72. Notification control section 62 can acquire information on a person in the vicinity based on a captured image of imaging section 67. Storage section 63 stores various application programs and various data files. Storage section 63 stores, for example, notification information 66 and the like similar to notification information 26 of storage section 23 and notification information 36 of storage section 33. Notification information 66 is acquired from management device 20, automatic moving device 30, or the like by communication. Imaging section 67 is an example of a detection section that detects surroundings, and is configured as a camera that captures an image. Communication section 69 is an interface that wirelessly exchanges information with external devices such as management device 20 and automatic moving device 30. Notification control section 62 exchanges information with an external device via communication section 69. Casters 70 have traveling wheels for causing signage 60 to travel, and are disposed on a lower surface side of frame 71. Frame 71 is a structure in which control device 61 and notification section 72 are disposed. Engagement members 44 engage with frame 71. Notification section 72 includes display section 73 and speaker 74. Display section 73 is a display for displaying a screen. Speaker 74 outputs sound and music together with a video displayed on display section 73. A visitor can obtain information visually with display section 73 and audibly with speaker 74. Power section 75 is a device that supplies power to control device 61, imaging section 67, notification section 72, and the like. Power section 75 includes storage battery 76 and power receiving section 77. Storage battery 76 is a secondary battery that stores power supplied from an external power supply and discharges the power as signage 60 operates. Power receiving section 67 is a unit that inputs power to an external power supply in a non-contact state using electromagnetic induction or a connected state in which a terminal is connected. Power receiving section 77 may receive power in a non-contact state from charging spot 17 disposed on a floor surface of commercial facility 11 or power supply section 48 of automatic moving device 30.

Note that signage 60 need not be a digital signage, and may be a signboard including leg portions 70B that do not need electric power and do not move and display section 73B from which an advertisement overhangs, as in signage 60B shown in Fig. 7. Also in signage 60B, automatic moving device 30 enters a lower surface of frame 71 and can move in commercial facility 11 with automatic moving device 30.

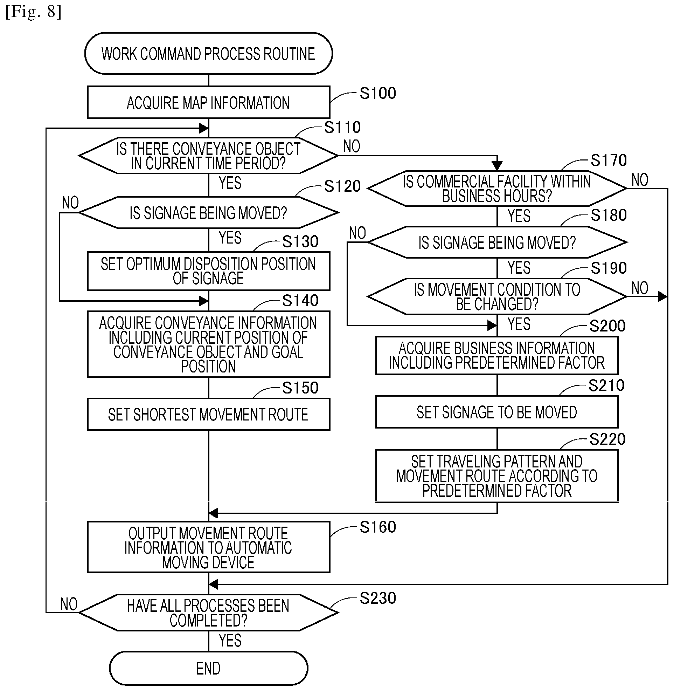

Next, a process in which automatic moving device 30 executes work in commercial facility 11 in conveyance system 10 configured as described above will be described. First, a process in which management device 20 sets the work content of automatic moving device 30 will be described. Here, in conveyance system 10, a process in which management device 20 specifies movement routes of automatic moving device 30 and signage 60 and automatic moving device 30 functioning as an AMR moves in store 15 or through passage 16 in commercial facility 11 will be described as an example of a specific example. Fig. 8 is a flowchart showing an example of a work command process routine executed by management control section 22 as the management section of management device 20. The routine is stored in storage section 23, and is performed after management device 20 is activated. When the routine is started, first, management control section 22 of management device 20 reads and acquires map information 25 from storage section 23 (S100), and determines whether there is a conveyance object in a current time period based on conveyance information 24 (S110). When there is a conveyance object in the current time period, management control section 22 determines whether automatic moving device 30 is moving signage 60 (S120). In conveyance system 10, automatic moving device 30 moves signage 60 in commercial facility 11 for advertisement when automatic moving device 30 is not conveying the conveyance object.

When automatic moving device 30 is moving signage 60, management control section 22 sets an optimum disposition position of signage 60 in order to interrupt the movement of signage 60 (S130). For example, management control section 22 may set a position on charging spot 17 closest to the current position of automatic moving device 30 as the disposition position. Further, management control section 22 may set, as the disposition position, a position on charging spot 17 that is closer to the current position of automatic moving device 30 and in which more visitors are present in the time period. Automatic moving device 30 preferably disposes moving signage 60 at a more effective disposition position.

After S130 or when signage 60 is not moving in S120, management control section 22 reads and acquires conveyance information 24 including the current position of the conveyance object and the goal position that is the conveyance destination (S140). Then, management control section 22 sets the shortest movement route between the current position and the goal position of the conveyance object (S150), and outputs movement route information including the set movement route to automatic moving device 30 (S160). While automatic moving device 30 is moving signage 60, the movement route information includes a movement route passing through the disposition position where the engagement of signage 60 is to be released, the current position of the conveyance object, and the goal position that is the conveyance destination. Automatic moving device 30 that has acquired the movement route information executes work such as movement and engagement release of signage 60 and engagement, movement, and engagement release of cart 12, according to the movement route information.

To the contrary, when there is no conveyance object in the current time period in S110, management control section 22 determines whether the commercial facility is within the business hours (S170), and when commercial facility 11 is within the business hours, management control section 22 determines that there is a visitor inside, and sets the movement route or the like of signage 60. Specifically, management control section 22 first determines whether automatic moving device 30 is moving signage 60 (S180), and acquires business information 27 including the predetermined factor when automatic moving device 30 is not moving signage 60 (S200). Then, management control section 22 sets signage 60 to be moved in commercial facility 11 (S210), and sets the traveling pattern, the movement route, and the like of automatic moving device 30 according to the predetermined factor of business information 27 (S220).

Here, the traveling pattern to be set may include, for example, a disposition pattern in which signage 60 moves from a certain point of commercial facility 11 to the next point, and a patrol pattern in which signage 60 moves in commercial facility 11 in a predetermined order. For example, in commercial facility 11, it is preferable that signage 60 is disposed near the doorway in order for the visitor to check the inside of the commercial facility in a time period immediately after the opening of the store. When time elapses after the store is opened, the customer moves to various places, and thus it is preferable that signage 60 patrols the facility. In addition, in commercial facility 11, it is preferable that signage 60 moves in a region where there are more visitors in order to give notification of the place of the food court and the meal menu even in the time period of the meal. Management device 20 can effectively perform a promotion and an advertisement for commercial facility 11 using business information 27 including the predetermined factor.

To the contrary, when automatic moving device 30 is moving signage 60 in S180, management control section 22 determines whether to change a movement condition (S190). When the movement condition is changed, management control section 22 changes and sets the movement route of signage 60 using business information 27 as described above (S200 to S220). After S220, management control section 22 outputs, in S160, movement route information including the set traveling pattern and movement route to automatic moving device 30.

After S160, or when the commercial facility is not within the business hours in S170, or when the movement condition is not changed in S190, management control section 22 determines whether all the processes have been completed (S230). When all the processes have not been completed, management control section 22 executes the processes of S110 and the subsequent steps. To the contrary, when all the processes have been completed in S230, the routine is ended. In this way, management device 20 sets the work content of automatic moving device 30.

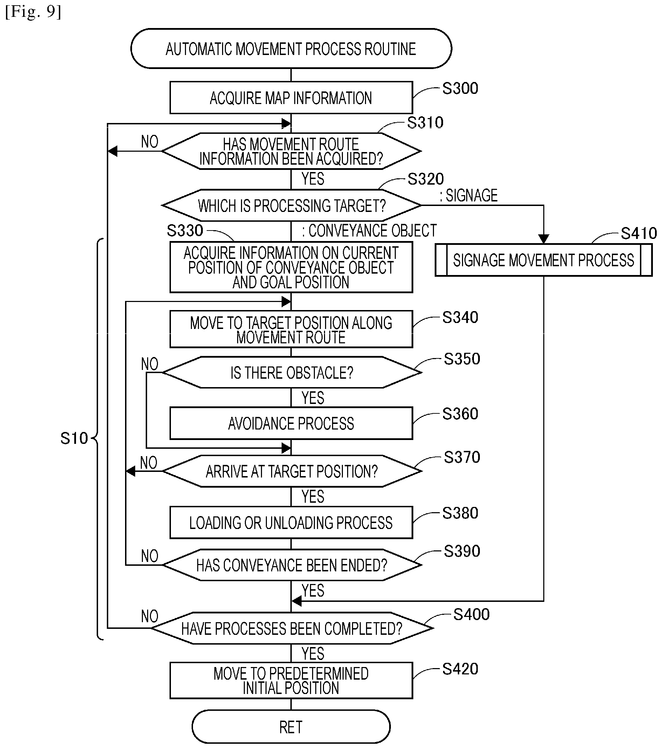

Next, processes executed by control device 31 of automatic moving device 30 will be described. Fig. 9 is a flowchart showing an example of an automatic movement process routine executed by control device 31 of automatic moving device 30. The routine is stored in storage section 33, and is executed by conveyance control section 32 after automatic moving device 30 is activated. When the routine is started, first, conveyance control section 32 of control device 31 reads and acquires map information 35 from storage section 33 (S300), and determines whether the movement route information has been acquired (S310). When the movement route information has not been acquired, conveyance control section 32 waits as it is, and when the movement route information has been acquired, conveyance control section 32 checks whether a processing target is the conveyance object or signage 60 (S320). When the processing target is the conveyance object, a conveyance mode described below is executed (S10). Specifically, conveyance control section 32 acquires the information on the current position of the conveyance object and the goal position that is the conveyance destination by reading conveyance information 34 (S330), and first moves vehicle body section 37 to a target position, that is, the current position of the conveyance object along the movement route (S340). The target position is the current position of cart 12 in the process in which automatic moving device 30 moves to receive cart 12, and is the goal position when automatic moving device 30 moves cart 12 to the goal position. Further, conveyance control section 32 uses detection section 50 to determine whether there is an obstacle on the movement route (S350), and when there is an obstacle, conveyance control section 32 moves while avoiding the obstacle (S360). After S360 or when there is no obstacle in S350, it is determined whether vehicle body section 37 has arrived at the target position (S370), and when vehicle body section 37 has not arrived at the target position, the processes of S340 and subsequent steps are executed. That is, conveyance control section 32 moves the movement route to the target position.

To the contrary, when vehicle body section 37 has arrived at the target position, conveyance control section 32 performs the loading process or the engagement process of cart 12 when the target position is an initial position of cart 12, and performs the unloading process or the engagement release process of cart 12 when the target position is the goal position (S380). Subsequently, conveyance control section 32 determines whether a conveyance process has been ended (S390), and when the conveyance process has not been ended, conveyance control section 32 executes the processes of S340 and the subsequent steps. To the contrary, when the conveyance process has been ended in S390, conveyance control section 32 determines whether all the processes to be performed by automatic moving device 30 have been completed (S400). When the processes have not been completed, conveyance control section 32 executes the processes of S310 and subsequent steps. To the contrary, when the processes have been completed in S400, conveyance control section 32 moves to a predetermined initial position of automatic moving device 30 as necessary (S420), and ends the routine.

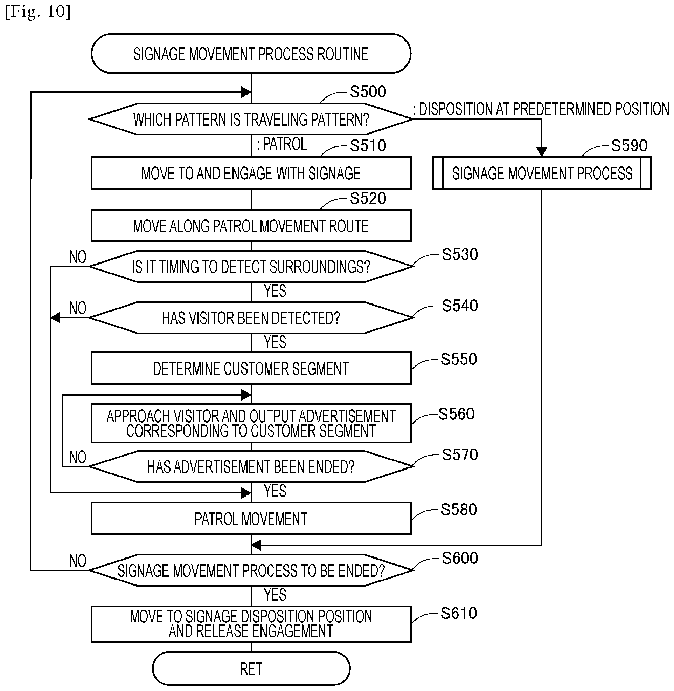

To the contrary, when the processing target is signage 60 in S320, a signage movement processing mode is executed (S410). Fig. 10 is a flowchart showing an example of a signage movement process routine executed by conveyance control section 32. The routine is stored in storage section 33 of control device 31, and is executed by conveyance control section 32 in S410. When the routine is started, first, conveyance control section 32 of control device 31 determines whether the traveling pattern of automatic moving device 30 is a patrol process or a disposition process at a predetermined disposition position based on the acquired movement route information (S500).

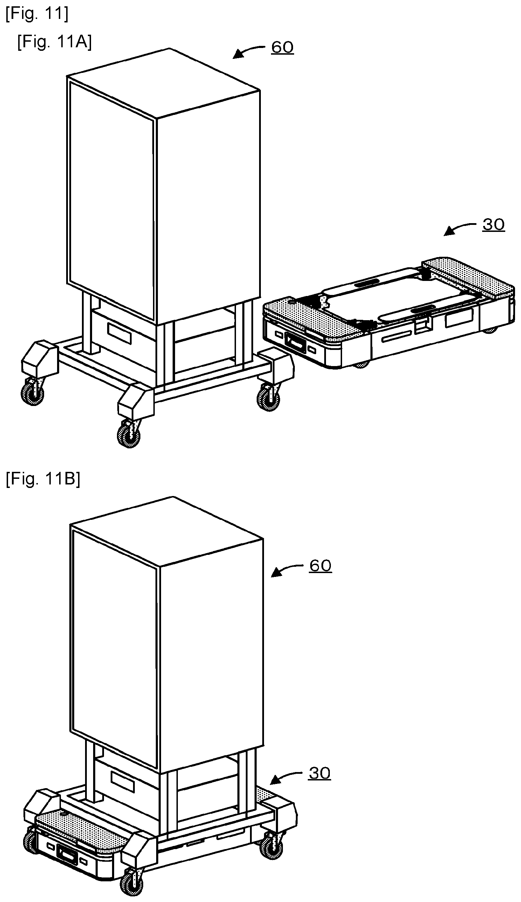

When the traveling pattern of automatic moving device 30 is disposing signage 60 at the predetermined disposition position, a signage movement process similar to the above-described conveyance mode is executed (S590). In the signage movement process, conveyance control section 32 performs the same processes as S330 to S390, that is, acquires information on the current position and the goal position of signage 60 to be conveyed, moves to the current position and engages with signage 60, and then moves to the goal position and controls drive section 40 and loading section 42 such that the engagement of signage 60 is released. Fig. 11 is a view of automatic moving device 30 engaging with signage 60, where Fig. 11A is a view immediately before the engagement, and Fig. 11B is a view after the engagement. Automatic moving device 30 enters a space beneath frame 71 of signage 60, lifts loading section 42 with lifting and lowering section 38, and engages engagement members 44 with frame 71. Signage 60 is towed by automatic moving device 30 as engagement members 44 engage with frame 71. In this case, power supply section 48 of automatic moving device 30 and power receiving section 77 of signage 60 face each other, and storage battery 76 can be charged by supplying power from storage battery 46 of automatic moving device 30. Signage 60 is disposed at the goal position and notifies a visitor of information. The goal position may be set on charging spot 17 in order to ensure a continuous operation of signage 60.

To the contrary, when the traveling pattern of automatic moving device 30 is patrol in S500, conveyance control section 32 executes the patrol process of signage 60. Specifically, conveyance control section 32 first controls loading section 42 and drive section 40 such that automatic moving device 30 moves to the current position of signage 60 to be moved and signage 60 engages with automatic moving device 30. After S510, conveyance control section 32 drives and controls drive section 40 such that automatic moving device 30 moves along a patrol movement route (S520). Next, conveyance control section 32 determines whether it is a timing to detect the surroundings of vehicle body section 37 (S530). The timing to detect the surroundings may be, for example, a predetermined interval, for example, every five minutes, or may be a predetermined time, for example, 11:00 and 11:10. When it is the timing to detect the surroundings, detection section 50 determines whether there is a visitor in the surroundings (S540). Conveyance control section 32 may detect a visitor by detecting the presence or absence of a person in a captured image of a stereo camera or the like of first detector 51 or the like. Alternatively, conveyance control section 32 may acquire an image captured by imaging section 67 of signage 60 via communication section 39 and check the presence of a visitor.

When a visitor is detected, conveyance control section 32 determines the customer segment of the visitor (S550). Examples of the customer segment include age segments such as children, young people, adults, and elderly people, and genders. When the customer segment is determined in S550, conveyance control section 32 approaches the visitor, causes signage 60 to output a promotion and an advertisement corresponding to the customer segment, and notifies the visitor of information (S560). In this case, conveyance control section 32 instructs signage 60 to display the advertisement content corresponding to the customer segment of the visitor. In response to the instruction, notification control section 62 of signage 60 displays the notification information on display section 73 and outputs sound from speaker 74. For example, signage 60 notifies customers of promotions and advertisements of restaurants, fashion shops, service providers, and the like according to the age segment.

Subsequently, conveyance control section 32 determines whether the advertisement of which notification is to be given to the visitor has been ended (S570), and when the advertisement has not been ended, conveyance control section 32 executes the processes of S560 and subsequent steps. To the contrary, when the advertisement has been ended, when it is not the surrounding detection timing in S530, or when no visitor has been detected in S540, conveyance control section 32 moves along the patrol movement route (S580). After S580 or after the signage movement process is executed in S590, conveyance control section 32 determines whether to end the signage movement process (S600). When the signage movement process is not ended, conveyance control section 32 repeatedly executes the processes of S500 and the subsequent steps. To the contrary, when the signage movement process is ended, conveyance control section 32 moves signage 60 to a position, where the engagement is to be released and signage 60 is to be disposed, to release the engagement (S610), moves signage 60 to the initial position or the like as necessary, and ends the routine.

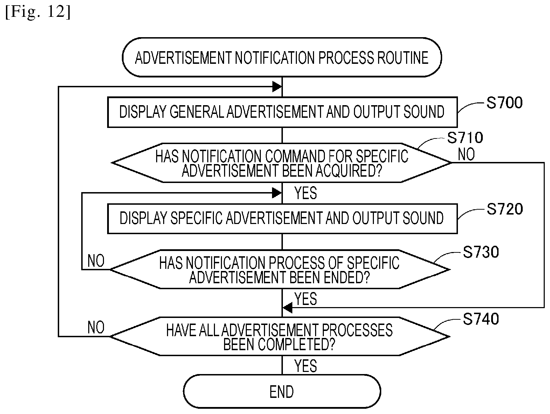

Next, processes executed by control device 61 of signage 60 will be described. Fig. 12 is a flowchart showing an example of an advertisement notification process routine executed by control device 61 of signage 60. The routine is stored in storage section 63, and is executed by notification control section 62 after signage 60 is activated. When the routine is started, first, notification control section 62 of control device 61 reads a general advertisement from storage section 63 and displays and outputs the general advertisement on display section 73, and when there is sound, also outputs the sound (S700). The general advertisement is set to those not related to a season or a time period, such as an advertisement of commercial facility 11. Signage 60 may basically notify the visitor mainly of the general advertisement. Next, notification control section 62 determines whether a notification command for a specific advertisement has been acquired from an external device (S710). Examples of the external device include management device 20 and automatic moving device 30.

When the notification command for the specific advertisement has been acquired, notification control section 62 displays the specific advertisement on display section 73, and when there is sound, outputs the sound from speaker 74 (S720). Next, notification control section 62 determines whether the notification process of the specific advertisement has been ended (S730), and when the notification process has not been ended, notification control section 62 performs the processes of S720 and subsequent steps. That is, notification control section 62 continues the notification process of the specific advertisement. To the contrary, when the notification process of the specific advertisement has been ended or when the notification command for the specific advertisement has not been acquired in S710, notification control section 62 determines whether all the advertisement processes have been completed (S740). When the advertisement processes have not been completed, notification control section 62 executes the processes of S700 and subsequent steps. That is, notification control section 62 executes the notification process of the specific advertisement in response to the command while giving notification of the general advertisement. To the contrary, when all the advertisement processes have been completed in S740, notification control section 62 ends the routine. Signage 60 executes the above-described advertisement process regardless of whether signage 60 is moving, and notifies the customer of information.

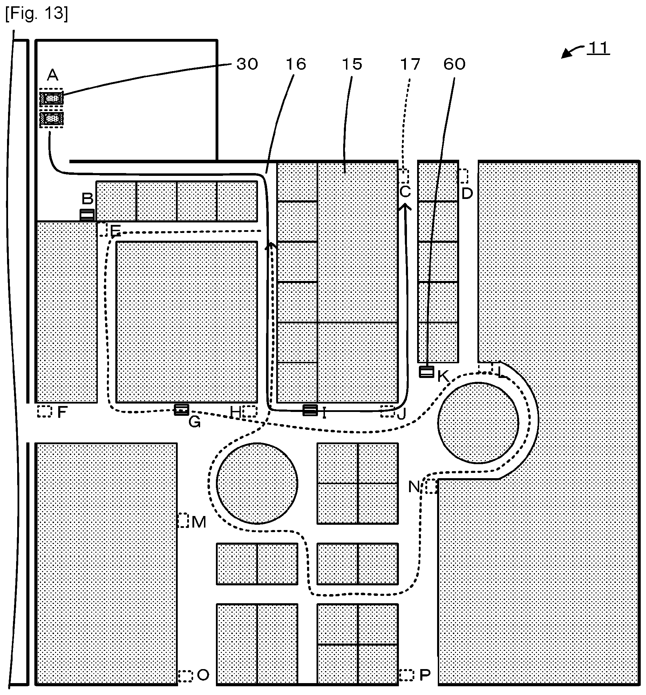

Fig. 13 is a view showing an example of the movement route of signage 60 in commercial facility 11. In Fig. 13, as the movement of signage 60 in the signage movement process, an example in which automatic moving device 30 moves from point A that is the initial position, engages with signage 60 at point I, and moves to point C is shown by a solid-line arrow. Further, in Fig. 13, as the movement of signage 60 in the patrol process, an example in which signage 60 moves from point E to point E via point L is shown by a dotted line. In commercial facility 11, for example, when signage 60 is preferably disposed at a predetermined disposition position such as the vicinity of the doorway when opening the store, automatic moving device 30 disposes signage 60 at the predetermined disposition position. In this case, it is desirable that automatic moving device 30 moves signage 60 to the goal position without making a side trip or the like so that signage 60 can be disposed at the predetermined disposition position earlier. To the contrary, in a time period such as before the meal time, automatic moving device 30 directly gives notification of information according to the customer segment by ignoring the movement route, for example, approaching the customer when the customer is present while patrolling a patrol course to notify more customers of information. Automatic moving device 30 conveys conveyance goods such as products in commercial facility 11 outside the business hours of commercial facility 11, but mostly stands by in the stockroom within the business hours of commercial facility 11. In conveyance system 10, an operation rate of automatic moving device 30 can be further increased by moving signage 60 in commercial facility 11 during a standby time of automatic moving device 30.

Here, a correspondence relationship between the elements of the present embodiment and the elements of the present disclosure will be clarified. Automatic moving device 30 of the present embodiment is an example of an automatic moving device of the present disclosure, drive section 40 is an example of a drive section, loading section 42 is an example of a loading section, conveyance control section 32 is an example of a control section, and detection section 50 is an example of a detection section. Management device 20 is an example of a management device, management control section 22 is an example of a management section, signage 60 is an example of a signage, and notification section 72 is an example of a notification section. In the present embodiment, an example of a control method and a management method of automatic moving device 30 of the present disclosure is also clarified by describing an operation of conveyance system 10.

Automatic moving device 30 of the present embodiment described above performs, in addition to movement of the conveyance object, the engagement with signage 60 that gives notification of information and movement of signage 60 in the specific space such as the inside of commercial facility 11. Therefore, in automatic moving device 30, the operation rate of automatic moving device 30 can be further improved through the movement of signage 60. In addition, for example, automatic moving device 30 can effectively provide information such as an increase in sales of commercial facility 11 or the like, through the movement of signage 60. In addition, conveyance control section 32 as the control section controls loading section 42 and drive section 40 such that vehicle body section 37 moves to the disposition position of signage 60, loading section 42 loads or engages with signage 60, moves in commercial facility 11, then releases the loading or engagement of signage 60, and disposes signage 60 at the predetermined disposition position. In automatic moving device 30, by moving signage 60 to the predetermined disposition position, it is possible to further enhance an advertising effect through the notification of the information.

In addition, conveyance control section 32 moves signage 60 to the predetermined disposition position according to the predetermined factor including at least one of the time period, the day of the week, the number of visitors, and the visitor segment, so that an information provision effect of signage 60 can be further enhanced. In addition, conveyance control section 32 moves signage 60 along the movement route corresponding to the predetermined factor including at least one of the time period, the day of the week, the number of visitors, and the visitor segment, so that the information provision effect of the signage can be further enhanced. Further, since automatic moving device 30 includes power supply section power supply section 48 that supplies power to signage 60 in a wireless or wired manner, it is possible to execute information provision of the signage by supplying power to signage 60.

In addition, since conveyance control section 32 moves along the movement route selected according to a detection result of detection section 50 that detects the surroundings, it is possible to achieve movement along the more effective movement route, and to execute more effective information provision. Further, since conveyance control section 32 moves signage 60 along the movement route and to the movement destination, the movement route and the movement destination being selected according to the detection result of detection section 50 that detects the surroundings, for example, to the vicinity of the visitor, it is possible to execute the more effective information provision. Further, since conveyance control section 32 causes signage 60 to output the notification information selected according to the detection result of detection section 50 that detects the surroundings, it is possible to execute the more effective information provision. Furthermore, since conveyance control section 32 releases the loading or engagement of signage 60 at a predetermined timing and switches to the work of moving the conveyance object, it is possible to return from the movement of signage 60 to the movement process of the conveyance object.

Management device 20 can further improve the operation rate of automatic moving device 30 through the movement of signage 60 by transmitting, to automatic moving device 30, a command to move signage 60. In addition, management device 20 can effectively provide information such as an increase in sales of commercial facility 11 that is the specific space or the like, by moving signage 60 in the specific space. In addition, since management control section 22 sets the predetermined position for disposing signage 60 and the movement route according to the predetermined factor including at least one of the time period, the day of the week, the number of visitors, and the visitor segment, it is possible to further enhance the information provision effect of signage 60 by adopting the predetermined position and the movement route according to the predetermined factor. Further, management control section 22 outputs, to automatic moving device 30, a command to switch to work of ending the movement of signage 60 and moving the conveyance object. In management device 20, it is possible to return from the movement of signage 60 to the conveyance process of the conveyance object.

Conveyance system 10 includes automatic moving device 30 described above and management device 20 described above. Since conveyance system 10 includes automatic moving device 30 and management device 20 described above, the operation rate of automatic moving device 30 can be further improved through the movement of signage 60, and further, information can be provided effectively.

The present disclosure is not limited in any way to the above-described embodiment, and as a matter of course, the present disclosure can be carried out in various aspects without departing from the technical scope of the present disclosure.

For example, in the above-described embodiment, the movement route of automatic moving device 30 or signage 60 or the predetermined disposition position of signage 60 is set using business information 27 including the predetermined factor, but the present disclosure is not particularly limited thereto. For example, the predetermined factor includes at least one of the season, the time period, the day of the week, the number of visitors, and the visitor segment, but at least one of them may be omitted, and in addition to or instead of the predetermined factor, another factor may be used. **In** addition, management device 20 may set the movement route of signage 60 or the predetermined disposition position of signage 60 without using the predetermined factor.

In the above-described embodiment, power supply section 48 that supplies power to signage 60 is provided in power section 45 of automatic moving device 30, but power supply section 48 may be omitted. In this case, automatic moving device 30 may move signage 60B without power section 75.

Although not particularly described in the above-described embodiment, conveyance control section 32 may release the loading or engagement of signage 60 at a predetermined timing, move to a standby location, and charge storage battery 46. Automatic moving device 30 can switch from the movement of signage 60 to the execution of the charging process of storage battery 46. As the predetermined timing, when a remaining capacity of storage battery 46 becomes equal to or less than a predetermined value, automatic moving device 30 may move to the standby location or charging spot 17 and charge storage battery 46. In this case, automatic moving device 30 may load signage 60 or release of engagement of signage 60 on charging spot 17. Automatic moving device 30 can also charge storage battery 76 provided in signage 60. Alternatively, management control section 22 may release the loading or engagement of signage 60 at the predetermined timing, and set a movement route for moving to the standby location and charging storage battery 46.

In the above-described embodiment, management device 20 sets the movement route of signage 60 or the predetermined disposition position after the movement of signage 60, but the present invention is not particularly limited thereto, and the movement route or the disposition position may be set by another device, for example, automatic moving device 30, signage 60, or the store PC.

In the above-described embodiment, conveyance control section 32 of automatic moving device 30 changes the movement route or the movement destination of signage 60 using the detection result of detection section 50, or sets the notification information on signage 60 using the detection result of detection section 50, but the present disclosure is not particularly limited thereto, and conveyance control section 32 may acquire an image captured by imaging section 67 as the detection section of signage 60 from signage 60, change the movement route or the movement destination of signage 60 based on the captured image, or set the notification information of which notification is given by signage 60. In addition, for example, management control section 22 of management device 20 may change the movement route or the movement destination of signage 60 using the detection result of detection section 50 or imaging section 67, or may set the notification information on signage 60 using the detection result of detection section 50 or imaging section 67. In conveyance system 10, it is possible to execute the more effective setting of the movement route and the movement destination or the more effective provision of information by using a result obtained by detecting a surrounding situation. Alternatively, automatic moving device 30 may omit these processes using detection results on the surroundings.

In the above-described embodiment, automatic moving device 30 loads or engages with signage 60 to move signage 60 by using loading section 42 as it is, but the present disclosure is not particularly limited thereto. For example, an attachment may be attached to signage 60, and automatic moving device 30 may be connected to the attachment. Automatic moving device 30 and signage 60 can be connected to the attachment attached to signage 60 as in the case where automatic moving device 30 is connected to cart 12. It is preferable that a power supply section is disposed in the attachment and power can be supplied from automatic moving device 30 to signage 60.

Although not particularly described in the above-described embodiment, for example, automatic moving device 30 may have different control modes between a case of conveying cart 12 and a case of moving signage 60. Automatic moving device 30 may switch the operation between, for example, a basket cart conveyance mode and a signage movement mode. Further, management device 20 may change the way of issuing the command between the conveyance of cart 12 and the movement of signage 60. In addition, in the signage movement mode, automatic moving device 30 may generate a route for guiding the visitor, or may only patrol the specific space without conveying the conveyance object.

In the above-described embodiment, in automatic moving device 30, traveling wheels 41 are mecanum wheels or omni wheels, but are not particularly limited thereto, and may be normal traveling wheels.

In the above-described embodiment, the present disclosure has been described as conveyance system 10, but the present disclosure is not particularly limited thereto, and may be management device 20 as the management device or automatic moving device 30. In addition, the present disclosure may be applied to a management method used by management device 20 or a program thereof in addition to the control method of automatic moving device 30.

The present disclosure may be configured as follows. For example, a management device of the present disclosure is a management device for use in a conveyance system including an automatic moving device configured to load or engage with a conveyance object to move the conveyance object, the management device includes:
a management section configured to command the automatic moving device to move a signage, which includes a notification section configured to give notification of information, in a specific space in a time period in which the automatic moving device does not move the conveyance object.

With the management device, by transmitting, to the automatic moving device, a command to move the signage, an operation rate of the automatic moving device can be further improved, and effective information provision such as an increase in sales of a commercial facility or the like can be performed through the movement of the signage.

A control method of an automatic moving device of the present disclosure is a control method for controlling an automatic moving device for use in a conveyance system configured to convey an article, the automatic moving device including a drive section configured to drive traveling wheels provided in a vehicle body section and a loading section disposed in the vehicle body section and configured to load or engage with a conveyance object, the control method includes:
a step of controlling the loading section and the drive section such that the loading section loads or engages with a signage including a notification section configured to give notification of information, and the traveling wheels are driven and the vehicle body section moves in a specific space.

In the control method, similarly to the above-described automatic moving device, the operation rate of the automatic moving device can be further improved through the movement of the signage. In addition, for example, with the control method, it is possible to effectively provide information such as an increase in sales of a commercial facility or the like, through the movement of the signage. In the control method, various aspects of the above-described automatic moving device may be adopted, or a step of achieving each function of the above-described automatic moving device may be added.

A management method of the present disclosure is a management method used in a conveyance system including an automatic moving device configured to load or engage with a conveyance object to move the conveyance object and executed by a computer, the management method includes:
a step of commanding the automatic moving device to move a signage, which includes a notification section configured to give notification of information, in a specific space in a time period in which the automatic moving device does not move the conveyance object.

In the management method, similarly to the above-described management device, it is possible to further improve the operation rate of the automatic moving device through the movement of the signage. In addition, for example, with the management method, it is possible to effectively provide information such as an increase in sales of a commercial facility or the like, through the movement of the signage. In the management method, various aspects of the above-described management device may be adopted, or steps for achieving each function of the above-described management device may be added.

The present description also discloses a technical idea in which "the automatic moving device according to Claim 1 or 2" in Claim 4 as originally filed is changed to "the automatic moving device according to any one of Claims 1 to 3", a technical idea in which "the automatic moving device according to Claim 1 or 2" in Claim 5 as originally filed is changed to "the automatic moving device according to any one of Claims 1 to 4", a technical idea in which "the automatic moving device according to Claim 1 or 2" in Claim 6 as originally filed is changed to "the automatic moving device according to any one of Claims 1 to 5", a technical idea in which "the automatic moving device according to Claim 1 or 2" in Claim 7 as originally filed is changed to "the automatic moving device according to any one of Claims 1 to 6", and a technical idea in which "the automatic moving device according to Claim 1 or 2" in Claim 11 as originally filed is changed to "the automatic moving device according to any one of Claims 1 to 7".

### Industrial Applicability

The automatic moving device, the management device, the conveyance system, the control method and the management method of the automatic moving device of the present disclosure can be used in the technical field of a distribution system configured to convey an article.

### Reference Signs List

10: conveyance system, 12: cart, 13: loading section, 14: caster, 15: store, 16: passage, 17: charging spot, 19: display shelf, 20: management device, 22: management control section, 23: storage section, 24: conveyance information, 25: map information, 26: notification information, 27: business information, 29: communication section, 30: automatic moving device, 31: control device, 32: conveyance control section, 33: storage section, 34: conveyance information, 35: map information, 36: notification information, 37: vehicle body section, 38: lifting and lowering section, 39: communication section, 40: drive section, 41: traveling wheel, 42: loading section, 43: loading member, 44: engagement member, 45: power section, 46: storage battery, 47: power receiving section, 48: power supply section, 50: detection section, 51: first detector, 52: second detector, 53: third detector, 54: fourth detector, 55: fifth detector, 56: lighting section, 60, 60B: signage, 61: control device, 62: notification control section, 63: storage section, 66: notification information, 67: imaging section, 69: communication section, 70: caster, 70B: leg portion, 71: frame, 72: notification section, 73, 73B: display section, 74: speaker, 75: power section, 76: storage battery, 77: power receiving section.

## Claims

1. An automatic moving device for use in a conveyance system configured to convey an article, the automatic moving device comprising:
a drive section configured to drive traveling wheels provided in a vehicle body section;
a loading section disposed in the vehicle body section and configured to load or engage with a conveyance object; and
a control section configured to control the drive section and the loading section,
wherein the control section is configured to control the loading section and the drive section such that the loading section loads or engages with a signage including a notification section configured to give notification of information, and the traveling wheels are driven and the vehicle body section moves in a specific space.

2. The automatic moving device according to Claim 1,
wherein the control section is configured to control the loading section and the drive section such that the vehicle body section moves to a disposition position of the signage, and the loading section loads or engages with the signage and moves in the specific space, and then releases the loading or engagement of the signage to dispose the signage at a predetermined disposition position.

3. The automatic moving device according to Claim 1 or 2, wherein the control section is configured to move the signage to the predetermined disposition position according to a predetermined factor including at least one of a season, a time period, a day of a week, the number of visitors, and a visitor segment, or move the signage on a movement route according to the predetermined factor.

4. The automatic moving device according to Claim 1 or 2, further comprising:
a power supply section configured to supply power to the signage in a wireless or wired manner.

5. The automatic moving device according to Claim 1 or 2, wherein the control section is configured to execute at least one of moving on a movement route selected according to a detection result of a detection section configured to detect surroundings, moving the signage to a predetermined disposition position specified according to the detection result, or outputting notification information selected according to the detection result to the signage via a communication section configured to exchange information with the signage.

6. The automatic moving device according to Claim 1 or 2, wherein the control section is configured to execute at least one of releasing the loading or engagement of the signage at a predetermined timing to switch to work of moving the conveyance object, or releasing the loading or engagement of the signage at a predetermined timing to move to a standby location for recharging.

7. The management device according to Claim 1 or 2, wherein the control section is configured to set at least one of a movement route of the signage, a movement destination of the signage, and notification information of which notification is given by the signage, according to a detection result of a detection section configured to detect surroundings, the detection section being provided in any of the signage and the automatic moving device.

8. A management device for use in a conveyance system including an automatic moving device configured to load or engage with a conveyance object to move the conveyance object, the management device comprising:
a management section configured to command the automatic moving device to move a signage, which includes a notification section configured to give notification of information, in a specific space in a time period in which the automatic moving device does not move the conveyance object.

9. The management device according to Claim 8, wherein the management section is configured to set a predetermined disposition position at which the signage is disposed and/or a movement route on which the signage is moved, according to a predetermined factor including at least one of a season, a time period, a day of a week, the number of visitors, and a visitor segment.

10. The management device according to Claim 8 or 9, wherein the management section is configured to output, to the automatic moving device, at least one of a command to end the movement of the signage and switch to work of moving the conveyance object and a command to end the movement of the signage and move to a standby location for recharging.

11. A conveyance system comprising:
the automatic moving device according to Claim 1 or 2; and
the management device according to Claim 8 or 9.

12. A control method for controlling an automatic moving device for use in a conveyance system configured to convey an article, the automatic moving device including a drive section configured to drive traveling wheels provided in a vehicle body section and a loading section disposed in the vehicle body section and configured to load or engage with a conveyance object, the control method comprising:
a step of controlling the loading section and the drive section such that the loading section loads or engages with a signage including a notification section configured to give notification of information, and the traveling wheels are driven and the vehicle body section moves in a specific space.

13. A management method used in a conveyance system including an automatic moving device configured to load or engage with a conveyance object to move the conveyance object and executed by a computer, the management method comprising:
a step of commanding the automatic moving device to move a signage, which includes a notification section configured to give notification of information, in a specific space in a time period in which the automatic moving device does not move the conveyance object.
